# EUROPÄISCHE PATENTSCHRIFT

(11) **EP 0 927 732 B1**
(45) Veröffentlichungstag und Bekanntmachung des Hinweises auf die Patenterteilung: **08.10.2003**
(21) Anmeldenummer: 98124438.7
(22) Anmeldetag: 22.12.1998
(51) Int. Cl.: C08G 65/20, B01J 39/04, B01J 49/00, C08F 6/08, C08G 65/30, C08J 5/20

(54) **Herstellung von Polytetrahydrofuran mit endständigen Hydroxylgruppen unter Verwendung von Ionenaustauschern**
Method of producing polytetrahydrofuranehaving terminal hydroxyl groups using ion exchangers.
Procédé de fabrication de polytetrahydrofurane ayant des groupes hydroxyles terminaux en utilisation d'échangeurs d'ions

(30) Priorität: 31.12.1997 DE 19758296
(43) Veröffentlichungstag der Anmeldung: 07.07.1999
(73) Patentinhaber: BASF AKTIENGESELLSCHAFT, 67056 Ludwigshafen (DE)
(72) Erfinder: Beer, Wulf Friedemann, Dr., 67434 Neustadt (DE); Beiser, Klaus, 55234 Eppelsheim (DE); Ciprian, Jürgen, Dr., 67071 Ludwigshafen (DE); Franz, Lothar, Dr., 67112 Mutterstadt (DE); Franzischka, Wolfgang, Dr., 67227 Frankenthal (DE); Palm, Christof, Dr., 67069 Ludwigshafen (DE); Pape, Frank-Friedrich, Dr., 67259 Kleinniedesheim (DE); Paul, Axel, Dr., 68623 Lampertheim (DE); Pessel, Ulrich-Dieter, 69118 Heidelberg (DE); Weck, Alexander, 77830 Bühlertal (DE)
(74) Vertreter: Isenbruck, Günter, Dr.

(56) Entgegenhaltungen:
- EP-A- 0 376 157
- US-A- 5 410 093

## Beschreibung

Die Erfindung betrifft ein Verfahren zur Herstellung hydroxylgruppenhaltiger Polymere, insbesondere zur Herstellung von Polytetrahydrofuran mit endständigen Hydroxylgruppen, aus den entsprechenden acyloxygruppenhaltigen Polymeren durch Umesterung mit Alkoholen in Gegenwart eines natriumhaltigen Katalysators.

Im Stand der Technik ist es bekannt, Polytetrahydrofuran mit endständigen Hydroxylgruppen, im folgenden kurz als PTHF bezeichnet, unter Verwendung kationischer Katalysatorsysteme aus Tetrahydrofuran herzustellen. In einem ersten Schritt wird dabei ein Polytetramethylenether erhalten, dessen Endgruppen vom Initiatorsystem und Reaktionsmedium bestimmt sind. Diese Endgruppen im primär erhaltenen Polymer müssen dann in Alkoholfunktionen umgewandelt werden. Eine übliche hier verwendete Methode stellt die durch alkalische Katalysatoren initierte Umesterung mit niederen Alkoholen dar. Als ein wirksamer Umesterungkatalysator ist Natriummethylat bekannt. Nach erfolgter Umesterung muß das aus dem als Katalysator zugegebenen Natriummethylat stammende Natrium wieder aus der PTHF-Lösung entfernt werden.

Im Stand der Technik geschieht dies durch Fällung mit Phosphorsäure. Dabei wird der Na⁺-und Natriummethylat enthaltenden PTHF-Lösung nach der Umesterung eine unterstöchiometrische Menge 85%iger Phosphorsäure zugegeben. Es bilden sich Natrium(hydrogen)phosphate, die in methanolischer PTHF-Lösung praktisch unlöslich sind und aufgrund der hohen (lokalen) Übersättigung kolloidal ausfallen. Ein filtrierbarer Niederschlag wird erst bei Verweildauern von mehr als 24 Stunden im Anschluß an die Phosphorsäurezugabe erhalten. Daher muß das kolloidale Fällprodukt aus Verweilzeitgründen durch alle der Umesterung nachfolgenden Verfahrensstufen in der PTHF-Lösung verbleiben.
Selbst nach einer Verweildauer von mehr als 24 Stunden ist für die Abtrennung des Fällproduktes aus der PTHF-Lösung noch eine zweistufige Filtration über Filter großer Feinheit erforderlich. Die Filter müssen häufig gewechselt werden, was manuell geschieht und daher aufwendig ist, und der Filterrückstand muß entsorgt werden. Außerdem ist es in größeren Zeitabständen erforderlich, den in den Apparaturen abgelagerten Schlamm manuell zu entfernen.

US-A-5,410,093 offenbart ein Verfahren, bei dem das katalysatorhaltige Polyol mit einem Magnesiumsalz, wie Magnesiumsulfat oder Magnesiumsulfit, gemischt wird. Diese Mischung wird dann dehydratisiert und anschließend der nunmehr in unlöslicher Form vorliegende Katalysator von dem dadurch katalysatorfreien Polyol abgetrennt. Durch Verwendung eines Überschusses an Magnesiumsalz soll sichergestellt werden, daß der Katalysator vollständig entfernt wird.

Durch die US-A-4,985,551 ist ein weiterer Stand der Technik bekannt geworden, bei dem Kationenaustauscher eingesetzt werden, um den bei der Polyol-Herstellung verwendeten Katalysator wieder zu entfernen. Offenbart wird ein aufwendiges Verfahren, das aus drei Schritten besteht. Dabei wird das Polyol zunächst mit einer ausreichenden Menge Wasser versetzt und bildet eine Emulsion. Diese wird im nächsten Schritt mit einem niederen aliphatischen Alkohol versetzt, um die Emulsion zu brechen. Nun wird ein makroporöser Kationenaustauscher nachgeschaltet, dem das gereinigte Polyol, Alkohol und Wasser entnommen werden kann.

Der Druckschrift ist zu entnehmen, daß frühere Versuche, den Katalysator unter Verwendung von Ionenaustauschern zu entfernen, grundsätzlich an der geringen Leistungsfähigkeit der Ionenaustauscher gescheitert sind, da bei den zu reinigenden Polyolen von einem Molekulargewicht von 500 bis 10.000 ausgegangen werden muß.

Um den Katalysatorgehalt der Polyole auf zumindest etwa 5 ppm zu senken, wäre eine zu große Menge an Ionenaustauscherharz erforderlich gewesen.

Ausgehend von diesem Stand der Technik lag der vorliegenden Erfindung daher die Aufgabe zugrunde, ein Verfahren bereitzustellen, bei dem nach erfolgter Umesterung das aus dem Katalysator stammende Natrium mit möglichst geringem Aufwand wieder entfernt werden kann.

Gelöst wird diese Aufgabe durch ein Verfahren zur Herstellung hydroxylgruppenhaltiger Polymere, insbesondere zur Herstellung von Polytetrahydrofuran mit endständigen Hydroxylgruppen, aus den entsprechenden acyloxygruppenhaltigen Polymeren durch Umesterung mit Alkoholen in Gegenwart eines natriumhaltigen Katalysators, indem die Polytetrahydrofuran-Lösung im Anschluß an die Umesterung zur Abtrennung der Natrium Kationen in Gegenwart einer katalytischen Menge Wasser direkt durch zumindest einen Ionenaustauscher geleitet wird.

Bei der Durchführung des erfindungsgemäßen Verfahrens hat es sich als ausreichend erwiesen, die PTHF-Lösung in Gegenwart einer nur katalytischen Menge Wasser direkt, d.h. ohne vorausgeschaltete Arbeits- oder Behandlungsschritte, durch den zumindest einen Ionenaustauscher zu leiten.
Die zum Austausch befähigten, H⁺-Ionen abgebenden funktionellen Gruppen des Ionenaustauscherharzes sind an ein organisches polymeres Grundgerüst über Benzolringe gebundene Sulfonsäurengruppen. In wässrigen Medien sind diese Gruppen praktisch vollständig dissoziert, so daß H⁺-Ionen einfach gegen andere Kationen ausgetauscht werden können. Im Gegensatz dazu ist in methanolischer Lösung der Dissoziationsgrad nur gering. Es wurde erkannt, daß Natriummethylat zunächst in Methanol und Natriumionen hydrolysiert werden muß. Hierzu dient die erfindungsgemäß vorgesehene katalytische Menge Wasser. Es hat sich gezeigt, daß die Reaktionsgeschwindigkeit vom Wassergehalt entscheidend beinflußt wird, wobei dieser wiederum vom Dissoziationsgrad der Sulfonsäuregruppen und des Natriumhydroxids, das sich aus der Hydrolyse des Natriummethylats in Methanol und Natriumlauge bildet, abhängig ist.

In einer bevorzugten Ausführungsform des erfindungsgemäßen Verfahrens wird ein Festbett-Ionenaustauscher verwendet. Dieser kann ein gelförmiger, starksaurer Kationenaustauscher sein. Es kann aber auch ein makroporöses hochvernetztes Harz in Form eines starksauren Kationenaustauschers verwendet werden.

In einer bevorzugten Ausführungsform kann außerdem vorgesehen sein, daß zumindest zwei hintereinander geschaltete Ionenaustauscher verwendet werden. In diesem Fall wird zunächst nur der erste Ionenaustauscher beladen, bis die Na⁺-Konzentration der Polytetrahydrofuran-Lösung nach Durchlaufen des Ionenaustauschers einen vorher bestimmten Höchstwert erreicht hat. Nach Erreichen dieses Höchstwertes wird der Ablauf des ersten Ionenaustauschers dem zweiten Ionenaustauscher zugeführt, bis in etwa der Durchbruch des Ionenaustauscherharzes des ersten Ionenaustauschers erfolgt. Diese Verfahrensweise hat den Vorteil, daß der erste Ionenaustauscher bis zum Erreichen seiner Kapazitätsgrenze beladen werden kann. Dadurch wird das Verfahren noch effizienter und kostengünstiger.

Den Durchbruch des Harzes kann man an einem starken Anstieg der Leitfähigkeit der aus dem ersten Ionenaustauscher ablaufenden Lösung erkennen. Es hat sich als günstig erwiesen, den ersten Ionenaustauscher dann außer Betrieb zunehmen, wenn die Leitfähigkeit am Ablauf dieses Ionenaustauschers auf 10% der Leitfähigkeit des Zulaufs angestiegen ist.

Bei Anwendung des erfindungsgemäßen Verfahrens kann der Natrium-Restgehalt auf Werte von 1 ppm oder weniger, vorzugsweise 0,5 oder 0,3 ppm, gesenkt werden.

Nachdem der erste Ionenaustauscher außer Betrieb genommen worden ist, wird das Verfahren mit dem zweiten Ionenaustauscher fortgesetzt. Dieser tritt insofern an die Stelle des ersten Ionenaustauschers, bis auch bei ihm der vorherbestimmte Höchstwert erreicht ist. Dann wird dieser nunmehr erste Ionenaustauscher wiederum mit einem weiteren Ionenaustauscher hintereinander geschaltet, um zu gewährleisten, daß der erste Ionenaustauscher bis zu seiner Kapazitätsgrenze beladen werden kann, ohne bei der PTHF-Lösung den vorherbestimmten Höchstwert der Natriumkonzentration zu überschreiten.

Die jeweils außer Betrieb genommenen Ionenaustauscher werden anschließend mittels verdünnter Mineralsäure wieder regeneriert und können dann für das Verfahren der Natriumabtrennung wieder zur Verfügung stehen. Dadurch wird eine quasikontinuierliche Verfahrensführung möglich.

Wenn im Rahmen dieser Erfindung und insbesondere bei der Erläuterung des erfindungsgemäßen Verfahrens allgemein die Herstellung von PTHF angesprochen wird, so umfaßt PTHF alle möglichen PTHF-Einstellungen, die beispielsweise als PTHF 650, PTHF 1000 und PTHF 2000 erhältlich sind, wobei die Zahl jeweils für das mittlere Molekulargewicht steht. Dabei hat sich als sehr vorteilhaft gezeigt, daß der erforderliche Zeitaufwand für Umstellungen der Produktionsanlage von PTHF eines bestimmten Molekulargewichts auf ein PTHF mit einem anderen Molekulargewicht sehr viel geringer ist, als bei dem bisher üblichen Verfahren über die Phosphorsäurefällung.

### Beispiele

Im folgenden wird zunächst die grundsätzliche Verfahrensweise bei der Natriumabtrennung durch zwei hintereinander geschaltete Ionenaustauscher dargestellt.

### 1. Abtrennung des Natriums durch zwei hintereinander geschaltete Ionenaustauscher

Der erste Ionenaustauscher wird solange beladen, bis die Natriumkonzentration, die im Ablauf des Ionenaustauschers gemessen wird, auf Werte ≥ 1 ppm ansteigt. Dabei ist darauf zu achten, daß bis zum Erreichen des vorbestimmten Höchstwertes von 1 ppm noch ausreichend Zeit verbleibt, um das Hintereinanderschalten dieses ersten lonenaustauschers mit einem zweiten Ionenaustauscher zu gewährleisten.

Wenn der vorherbestimmte Höchstwert erreicht ist, wird der Ablauf des ersten Ionenaustauschers dem zweiten Ionenaustauscher, der zu diesem Zeitpunkt mit Natriumabgereichertem PTHF gefüllt ist, zugeführt. Ein Anstieg der Leitfähigkeit des aus dem ersten Ionenaustauscher ablaufenden Produktes zeigt den Beginn des Durchbruches des Harzes des Ionenaustauschers an. Für die Zwecke des vorliegenden Verfahrens wurde der erste Ionenaustauscher dann außer Betrieb genommen, wenn die Leitfähigkeit am Ablauf dieses Ionenaustauschers auf 10% der Leitfähigkeit des Zulaufes angestiegen war. Es hat sich gezeigt, daß ein Außerbetriebnehmen bei höheren Leitfähigkeiten die Arbeitskapazität nur unwesentlich erhöht.

Wenn so die Kapazitätsgrenze des ersten Ionenaustauschers erreicht ist, wird er vom Zulauf der PTHF-Lösung abgetrennt, so daß der nachgeschaltete zweite Ionenaustauscher nunmehr anstelle des ersten Ionenaustauschers tritt. Das im ersten Ionenaustauscher noch enthaltene PTHF wird mit Methanol verdrängt und in den Zulaufpuffer der Ionenaustauscherstufe zurückgeführt.

Wenn das Ionenaustauscherbett mit Methanol produktfrei gewaschen worden ist, wird die in der Schüttung des Festbettes des Ionenaustauschers noch zurückgehaltene Flüssigkeit mit Stickstoff verdrängt. Diese Flüssigkeit ist sowohl PTHF- als auch natriumhaltig, weshalb sie ebenfalls in den Zulaufpuffer zurückgeführt wird. Das Ionenaustauscherbett wird nun mit destilliertem Wasser gefüllt, entlüftet und methanolfrei gewaschen, um beim nachfolgenden Regenerieren, welches mit Schwefelsäure durchgeführt wird, ein Ausfallen von Natriumsulfat, das das Festbett und/oder die Harzauflagen verstopfen würde, zu vermeiden.

Die Regenerierung des Ionenaustauscherharzes erfolgt mit verdünnter Mineralsäure, beispielsweise mit verdünnter Schwefelsäure. In der Praxis wurde eine 5%ige verdünnte Schwefelsäure eingesetzt. Der Erfolg bei der Regenerierung ist aber nicht auf den Einsatz von 5%iger Schwefelsäure oder auf die Verwendung von Schwefelsäure als solcher beschränkt. Im Anschluß an die Regenerierung wird das Harz mit destilliertem Wasser säurefrei gewaschen und das Waschwasser mit Stickstoff verdrängt, um möglichst wenig Wasser in das Verfahren einzutragen. Im gequollenen Harz verbliebenes Wasser wird daher durch Waschen mit Methanol entfernt.

Nachdem der Ionenaustauscher in dieser Weise regeneriert worden ist, wird das Ionenaustauscherbett mit umgeesterter PTHF-Lösung aus dem Zulaufpuffer gefüllt. Überschuß-PTHF-Lösung und verdrängtes Methanol werden in den Zulaufpuffer zurückgeführt. Um eine PTHF-Lösung aus dem Ablauf des Ionenaustauschers zu erhalten, die den vorherbestimmten Höchstwert nicht überschreitet, wird das Methanol aus dem Ionenaustauscherbett verdrängt. Dabei entspricht der Volumenstrom der Belastung des Bettes bei der Belade-Sequenz.

Sowohl bei der Beladung als auch bei der Regenerierung wird das lonenaustauscherbett laminar durchströmt.

### 2. Versuchsanordnung für die nachfolgend beschriebenen Untersuchungen

Die bei der Umesterung erhaltene methanolische, natriumhaltige PTHF-Lösung wird über eine Zahnradpumpe und einen Kolbenzähler in eine mit dem Ionenaustauscher gefüllte, doppelwandige temperierte Glassäule gefördert. Die Glassäule hat dabei einen Durchmesser von 30 mm. Die Zulaufinenge wird fest eingestellt und über den Regelkreis Kolbenzähler <-> Zahnradpumpe konstant gehalten. Die PTHF-Lösung durchströmt die Ionenaustauscherschüttung mit einem Volumenstrom von etwa 2100 ml/h, was 3,3 Bettvolumen (bezogen auf das Harzvolumen) pro Stunde und einer Leerrohrgeschwindigkeit von 3m/h entspricht, und wird dabei von Natriumionen befreit. Die Leitfähigkeit und der pH-Wert des Säulenablaufs werden on-line überwacht und registriert. Der Säulenablauf wird fraktioniert aufgefangen, um den Natriumgehalt und die Qualitätsmerkale des Produktes off-line bestimmen zu können. Ein Dauerbetrieb unter Einhaltung des vorher bestimmten Höchstwertes der Natriumkonzentration von weniger als 1 ppm wird durch den wechselweisen Betrieb zweier identischer Säulen und die Steuerung der Zulaufpumpe über die Leitfähigkeit des Säulenablaufes ermöglicht. Die zu der Regenerierung des jeweiligen Ionenaustauschers benötigten Wasch- und Regenerierlösungen werden in einer separat regelbaren Zulaufeinheit bereitgestellt. Die Belastungsdaten der Versuchssäulen stimmen mit denen der Betriebssäule überein.

Da die Leitfähigkeit der methanolischen PTHF-Lösung über mehr als drei Zehnerpotenzen dem Natriumgehalt direkt proportional ist, wurde sie für die Kontrolle und Bestimmung des Durchbruches des Ionenaustauscherharzes als geeignet angesehen. Zur Messung wurde ein korrosionsfester Sensor (Materialen: PTFE/Glas/Platin) verwendet und die jeweilige Meßzeit lag im ms-Bereich.

### 3. Untersuchung verschiedener Ionenaustauscherharze und Bestimmung ihrer Harzkapazität

Es wurde ein gelförmiger starksaurer Ionenaustauscher untersucht und ein makroporöses hochvernetztes Harz auf Polystyrolbasis mit Sulfonatgruppen als funktioneller Gruppe. Das gelförmige starksaure Ionenaustauscherharz wird im folgendem mit A und das makroporöse hochvernetzte Ionenaustauscherharz mit B bezeichnet.

Im Vergleich zeigt Harz A aufgrund der fehlenden Quervernetzung eine geringere Festigkeit und ist chemisch unbeständiger, besitzt aber eine höhere Kapazität als das mechanisch und chemisch beständigere Harz B, das einen hohen Quervernetzungsgrad aufweist.

Bei mehrmaliger Beladung und Regeneration der genannten Harze wurden bis zum beginnenden Anstieg der Natriumablaufkonzentration (entspricht dem 1. Durchbruch) und zur Sättigung des Harzes (entspricht dem 2. Durchbruch: Ablauf = Zulaufkonzentration) für PTHF 1000 die folgenden maximalen Harzkapazitäten bestimmt:

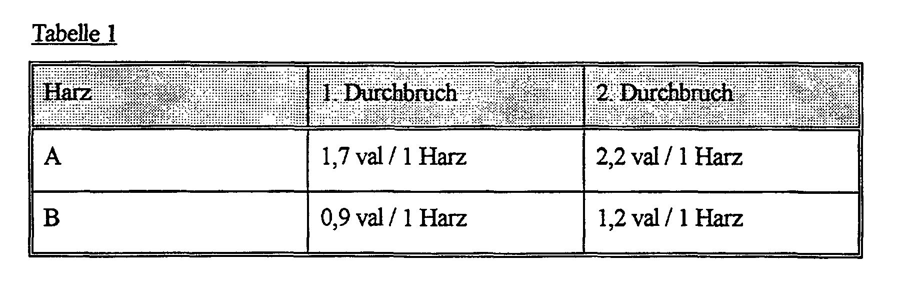

Werden die Harze im Dauerbetrieb nicht bis zum 2. Durchbruch belastet, ergeben sich für PTHF 1000 die folgenden maximalen Harzkapazitäten:

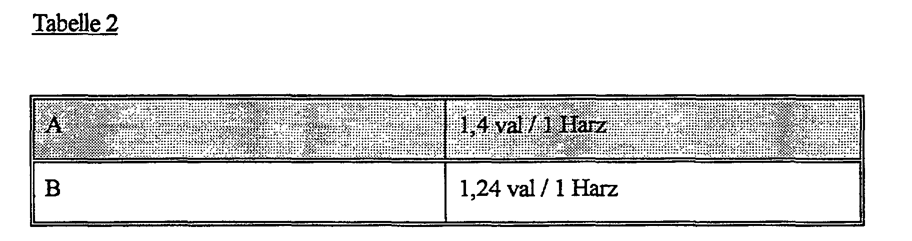

Grundsätzlich konnten in etwa 70-75% der Harzkapazität ausgenutzt werden. Harz A zeigte einen Kapazitätseinbruch, was auf dessen gelförmige Konsistenz zurückzuführen ist. Eine vergleichende Siebanalyse der Harze A und B vor und nach einem Dauereinsatz von 50 Belade- und Regenerierzyklen zeigte zudem, daß das Harz A zu in etwa 50% in Bruchstücke zerfallen war, während das Harz B keinen Harzbruch aufwies.

In weiteren Versuchen wurden die Harzkapazitäten von Harz B bestimmt, wenn der Ionenaustauscher mit einer PTHF-Lösung mit höherem Molekulargewicht beladen wird. Diese Versuche wurden mit PTHF 2000 durchgeführt und ergaben folgende maximale Harzkapazität:

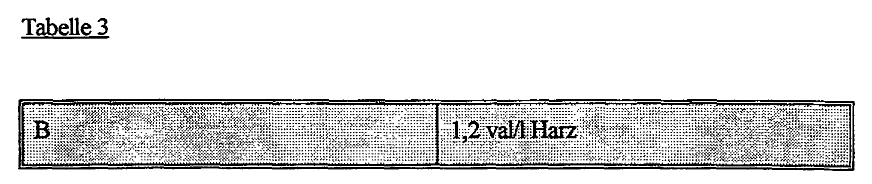

Daraus folgt, daß bei dem getesten Harz B für PTHF 2000, das im Vergleich zu PTHF 1000 eine höhere Viskosität aufweist, nahezu gleiche Versuchsergebnisse und damit eine vergleichbare Trennqualität erreicht werden konnten.

### 4. Untersuchungen über die Qualität des PTHF nach Durchlaufen der Ionenaustauscher

Zur Bestimmung der Produktqualität wurden Hydroxylzahl, pH-Wert, Esterzahl, Farbzahl und Säurezahl bestimmt. Die Hydroxylzahl und die Esterzahl blieben unverändert. Insgesamt lagen alle Werte innerhalb der zulässigen Grenzen und wurde für die Farbzahl sogar unterschritten. Das bedeutet, daß das PTHF nicht mit zusätzlichen farbgebenden Komponenten aus dem jeweiligen Ionenaustauscherharz und/oder den Regenerier- und Waschflüssigkeiten belastet, sondern sogar noch entfärbt wurde.

## Patentansprüche

1. Verfahren zur Herstellung hydroxylgruppenhaltiger Polymere, insbesondere zur Herstellung von Polytetrahydrofuran mit endständigen Hydroxylgruppen, aus den entsprechenden acyloxygruppenhaltigen Polymeren durch Umesterung mit Alkoholen in Gegenwart eines natriumhaltigen Katalysators, bei dem die Polytetrahydrofuran-Lösung im Anschluß an die Umesterung zur Abtrennung der Natrium-Kationen in Gegenwart einer katalytischen Menge Wasser direkt durch zumindest einen Ionenaustauscher geleitet wird.

2. Verfahren nach Anspruch 1, **dadurch gekennzeichnet, daß** ein Ionenaustauscher-Festbett verwendet wird.

3. Verfahren nach Anspruch 1 oder 2, **dadurch gekennzeichnet, daß** ein gelförmiger, starksaurer Kationenaustauscher verwendet wird.

4. Verfahren nach Anspruch 1 oder 2, **dadurch gekennzeichnet, daß** als Ionenaustauscher ein makroporös hochvernetzter starksaurer Kationenaustauscher verwendet wird.

5. Verfahren nach einem der Ansprüche 1 bis 4, **dadurch gekennzeichnet, daß** zumindest zwei hintereinandergeschaltete Ionenaustauscher verwendet werden, wobei zunächst nur der erste Ionenaustauscher beladen wird, bis die Na⁺-Konzentration der Polytetrahydrofuran-Lösung nach Durchlaufen des Ionenaustauschers einen vorherbestimmten Höchstwert erreicht, und wobei nach Erreichen des Höchstwertes beide Ionenaustauscher bis in etwa zum Durchbruch des Ionenaustauscherharzes des ersten Ionenaustauschers gemeinsam verwendet werden.

6. Verfahren nach Anspruch 5, **dadurch gekennzeichnet, daß** der vorherbestimmte Höchstwert der Na⁺-Konzentration < 1 ppm beträgt.

7. Verfahren nach einem der Ansprüche 1 bis 6, **dadurch gekennzeichnet, daß** das Ionenaustauscherharz mit verdünnter Mineralsäure regeneriert wird.

## Claims

1. A process for preparing hydroxyl-containing polymers, in particular for preparing polytetrahydrofuran with terminal hydroxyl groups, from the corresponding acyloxy-containing polymers by transesterification with alcohols in the presence of a sodium-containing catalyst, by passing the polytetrahydrofuran solution in the presence of a catalytic amount of water directly through at least one ion exchanger following the transesterification in order to remove the sodium cations.

2. A process as claimed in claim 1, wherein a fixed ion exchanger bed is used.

3. A process as claimed in claim 1 or 2, wherein a strongly acidic cation exchanger in gel form is used.

4. A process as claimed in claim 1 or 2, wherein a macroporous highly crosslinked strongly acidic cation exchanger is used as ion exchanger.

5. A process as claimed in any of claims 1 to 4, wherein at least two ion exchangers in series are used, with initially only the first ion exchanger being loaded until the Na⁺ concentration of the polytetrahydrofuran solution reaches a previously determined maximum value after flowing through the ion exchanger, and with the two ion exchangers being used together after the maximum value is reached until roughly the breakthrough of the ion exchange resin of the first ion exchanger.

6. A process as claimed in claim 5, wherein the previously determined maximum value of the Na⁺ concentration is < 1 ppm.

7. A process as claimed in any of claims 1 to 6, wherein the ion exchange resin is regenerated with dilute mineral acid.

## Revendications

1. Procédé de préparation de polymères contenant des groupes hydroxyle, en particulier de préparation de polytétrahydrofuranne à groupes hydroxyle terminaux, à partir des polymères contenant des groupes acyloxy correspondants, par transestérification avec des alcools en présence d'un catalyseur contenant du sodium, dans lequel la solution de polytétrahydrofuranne est, à la suite de la transestérification, conduite directement au travers d'au moins un échangeur d'ions pour la séparation des cations sodium, en présence d'une quantité catalytique d'eau.

2. Procédé suivant la revendication 1, **caractérisé en ce qu'**on utilise un lit fixe d'échangeur d'ions.

3. Procédé suivant l'une des revendications 1 et 2, **caractérisé en ce qu'**on utilise un échangeur de cations fortement acide, en forme de gel.

4. Procédé suivant l'une des revendications 1 et 2 **caractérisé en ce que**, comme échangeur d'ions, on utilise un échangeur de cations fortement acide, hautement réticulé, macroporeux.

5. Procédé suivant l'une des revendications 1 à 4, **caractérisé en ce qu'**au moins deux échangeurs d'ions montés l'un derrière l'autre sont utilisés, seul le premier échangeur d'ions étant tout d'abord chargé jusqu'à ce que la concentration en Na⁺ de la solution de polytétrahydrofuranne atteigne, après passage à travers l'échangeur d'ions, une valeur maximale prédéterminée, les deux échangeurs d'ions étant, après obtention de la valeur maximale, utilisés conjointement jusqu'à approximativement la rupture de la résine échangeuse d'ions du premier échangeur d'ions.

6. Procédé suivant la revendication 5, **caractérisé en ce que** la valeur maximale prédéterminée de la concentration de Na⁺ est <1 ppm.

7. Procédé suivant l'une des revendications 1 à 6, **caractérisé en ce que** la résine échangeuse d'ions est régénérée par un acide minéral dilué.
